# EUROPEAN PATENT APPLICATION

(11) **EP 4 800 253 A1**
(43) Date of publication of application: **02.09.2026**
(21) Application number: 25160131.6
(22) Date of filing: 26.02.2025
(51) Int. Cl.: F16B 13/06

(54) **EXPANSION ANCHOR WITH SHEAR SUPPORT SLEEVE ENGAGING THE BOLT**

(71) Applicant: Hilti Aktiengesellschaft, 9494 Schaan (LI)
(72) Inventor: Schaeffer, Marc, 8852 Altendorf (CH)
(74) Representative: Hilti Aktiengesellschaft Corporate Intellectual Property

(57) **Abstract**

Expansion anchor having an anchor bolt having a longitudinal axis, a screw thread, which is provided on the anchor bolt in a threaded zone, and an expansion sleeve surrounding the anchor bolt, wherein the anchor bolt has an expansion body located in a front region of the anchor bolt, and a flange that provides an abutment for the expansion sleeve, wherein the flange is arranged between the expansion body and the threaded zone, and wherein a shear support sleeve is provided, which surrounds the threaded zone, characterized in that the screw thread is intersected by an axially extending groove, and the shear support sleeve is provided, on its inside, with an axially extending ridge, which projects into the axially extending groove intersecting the thread.

## Description

The invention relates to an expansion anchor according to the preamble of claim 1.

DE9410844 U1 describes an expansion anchor that includes a flanged sleeve for additional shear support. The anchor is designed to be installed in a stepped bore, with the flanged sleeve positioned in the larger-diameter section of the bore.

Further expansion anchors with shear support sleeves are described in European patent applications EP24192822.5, EP24205821.2 and EP24205830.3.

EP 2848825 A1 describes an expansion anchor having a hexalobular neck structure, which is engaged by the expansion sleeve.

It is an object of the invention to provide an expansion anchor which provides particularly good performance at low manufacturing and/or installation effort.

This object is achieved by an expansion anchor according to claim 1. Dependent claims refer to preferred embodiments of the invention.

Accordingly, there is provided an expansion anchor having
- an anchor bolt having a longitudinal axis,
- a screw thread, which is provided on the anchor bolt and which winds around the anchor bolt and around the longitudinal axis in a threaded zone of the anchor bolt, and
- an expansion sleeve surrounding the anchor bolt,
- wherein the anchor bolt has an expansion body located in a front region of the anchor bolt, wherein the expansion body has a converging zone for expanding the expansion sleeve,
- wherein the anchor bolt further has a flange that provides an abutment for the expansion sleeve, wherein the flange is arranged between the expansion body and the threaded zone,
- wherein the anchor bolt further has a neck, which is arranged between the expansion body and the flange, and which adjoins both the expansion body and the flange, wherein the expansion sleeve surrounds the neck of the anchor bolt, and
- wherein a shear support sleeve is provided, which surrounds the threaded zone at least in regions of the threaded zone,
   characterized in that
- the screw thread is intersected by an axially extending groove, and
- the shear support sleeve is provided, on its inside, with an axially extending ridge, which projects into the axially extending groove intersecting the thread.

The expansion anchor thus comprises a shear support sleeve, which surrounds the threaded zone at least in regions of the threaded zone. This shear support sleeve is intended to take up shear loads arising at the mouth of a borehole in the substrate in which the anchor bolt is arranged, thereby providing relief for the anchor bolt, which in term can allow downsizing the thread size of the screw thread of the expansion anchor. The reduction of the thread size can reduce the amount of required material, and it can provide space between the borehole inner diameter and the anchor while keeping the neck of the anchor bolt decisive for tension steel failure. In the created space around the threaded region, the shear support sleeve that in particular comprises a high strength is introduced in order to take up shear loads so as to reduce notch effects at the screw thread when shear loads are applied.

According to the invention, the screw thread is interrupted by a groove that runs along the longitudinal axis of the anchor bolt. The shear support sleeve, which surrounds the anchor bolt at least in the threaded region, has a ridge projecting from its inner surface. This ridge extends axially and is designed to fit into the groove and to interlock with the grove. This leads to an overall increased shear-relevant cross-section as the gaps in the thread flights of the anchor bolt are filled by the continuous ridge on the inside of the shear support sleeve. Overall, the shear resistance of the expansion anchor will be increased because of a higher share of cross-section of the high strength and massive shear support sleeve as compared to the screw thread. Consequently, a particularly good shear performance is provided. Since the screw thread provides a high level of redundancy, this can be achieved without significantly affecting thread performance.

Throughout this document - wherever the terms "axially", "longitudinally", "radially", "cross section", and "circumferentially" are used, they should refer, in particular, to the longitudinal axis of the anchor bolt, unless indicated otherwise. The longitudinal axis of the anchor bolt extends through the threaded zone, through the flange, through the neck and through the expansion body.

The expansion anchor is of the stud-type (i.e. it is provided with rearward expansion sleeve abutment on the anchor bolt provided by the flange).

Preferably, the shear support sleeve consists of metal, more preferably of steel, which can also be coated. This can provide particularly good performance at particularly low effort. Alternatively, the shear support sleeve could consist of a polymer material. Preferably, the anchor bolt consists of metal, more preferably of steel, which can also be coated. This can provide particularly good performance at particularly low effort. In particular, as already hinted at above, the shear support sleeve material may have higher strength, e.g. yield strength, than has the anchor bolt material.

Preferably, the axially extending groove does not reach into the anchor bolt. Accordingly, the anchor bolt itself, i.e. the core of the expansion anchor, is not weakened by the groove, which can provide a particularly well-performing expansion anchor at particularly little effort. Preferably, the axially extending groove just reaches the anchor bolt. Accordingly, the axially extending groove cuts the entire height of the screw thread, but it does not reach deeper into the anchor bolt.

According to a preferred embodiment of the invention, the screw thread is intersected by n axially extending grooves, and the shear support sleeve is provided, on its inside, with n axially extending ridges, wherein each ridge projects into a different one of the axially extending grooves intersecting the screw thread, and wherein n is a natural number, excluding zero. For example, n can equal 4, 5 or 6. Accordingly, the screw thread features n axially extending grooves that run parallel to the longitudinal axis. The shear support sleeve is designed with n axially extending ridges on its inner surface. Each ridge aligns with and projects into a corresponding groove on the screw thread. Here, n is a natural number indicating the number of grooves and ridges present. Each ridge projects into a separate groove. Providing a plurality of ridges can provide a particularly good shear performance, as it multiplies the mechanism described above. The pattern of the plurality of ridges corresponds to the pattern of the plurality of grooves in order to allow engagement.

It is particularly preferred that n is greater than or equal to 2, i.e. n ≥ 2.

It is also particularly preferred that n is smaller than or equal to 1.5 times the outside diameter of the screw thread in millimetres, with the result of this multiplication rounded up to the nearest whole number. Accordingly, $n \leq \left⌈1.5\times \left(outside diameter of the screw thread in mm\right)\right⌉$. Alternatively or additionally, it can be provided that n is smaller than or equal to 1.5 times the nominal metric diameter of the screw thread, with the result of this multiplication rounded up to the nearest whole number. Accordingly, $n \leq \left⌈1.5\times \left(nominal metric diameter of the screw thread\right)\right⌉$. The mentioned numbers of n can provide a particularly good balance between shear performance and thread performance.

Advantageously, the axially extending grooves exhibit rotational symmetry, with respect to the longitudinal axis, in particular n-fold rotational symmetry, with respect to the longitudinal axis, wherein n is the natural number mentioned above. Accordingly, the grooves are evenly spaced in the circumferential direction and identical in shape. A symmetric setup can be advantageous in view of load balancing and thus performance. The ridges preferably have the same symmetry than have the grooves.

Preferably, the n axially extending grooves span, in total, between 25% to 60% (inclusive) of the overall circumference of the anchor bolt, in particular between 40% to 60% (inclusive) of the overall circumference of the anchor bolt. Accordingly, the total angular coverage of the grooves in cross-section (i.e. perpendicular to the longitudinal axis) is in particular between 144° to 216°, inclusive. This design can provide a particularly good balance between shear characteristics and axial load characteristics.

The invention is explained in greater detail below with reference to preferred exemplary embodiments, which are depicted schematically in the accompanying drawings. Individual features of the exemplary embodiments presented below can be implemented either individually or in any combination within the scope of the present invention.

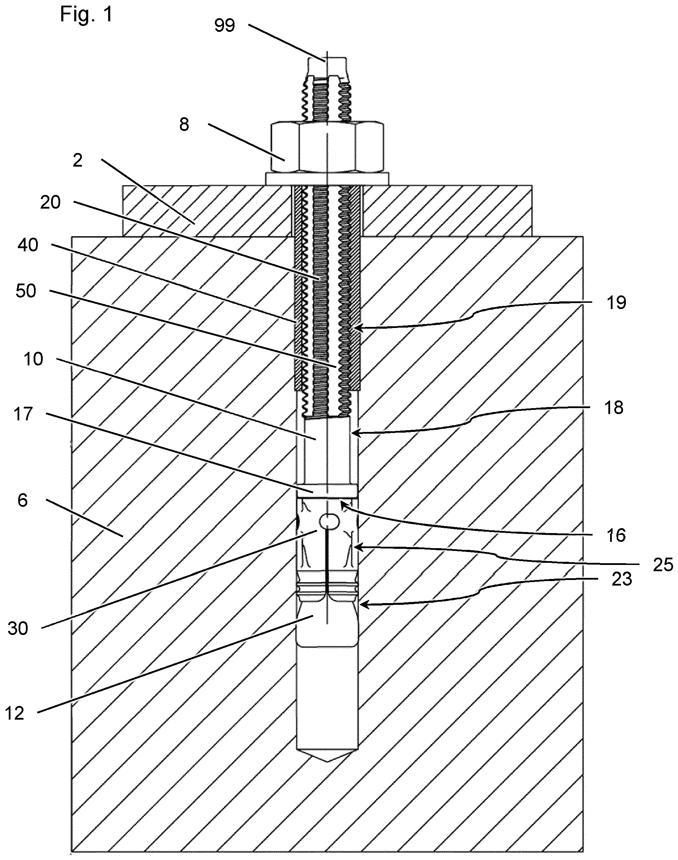

Figure 1 is a partly sectional side view of an expansion anchor embedded in a concrete substrate, showing the shear support sleeve, the substrate, and the attachment part in section.

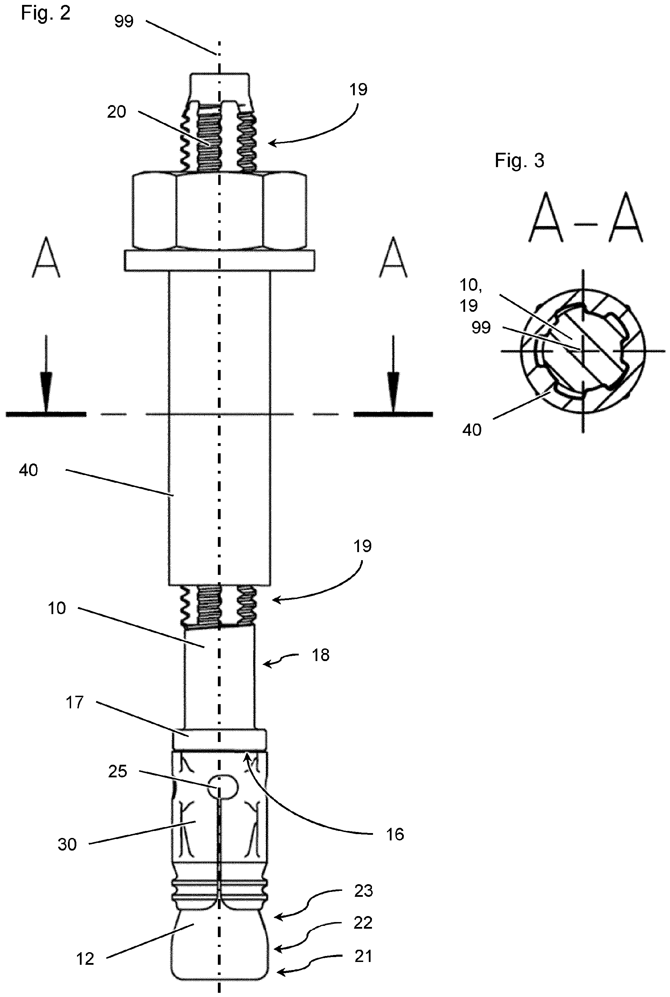

Figure 2 is a side view of the expansion anchor depicted in figure 1.
Figure 3 is a cross-sectional view of the expansion anchor depicted in figure 1, labeled A-A in Figure 2.

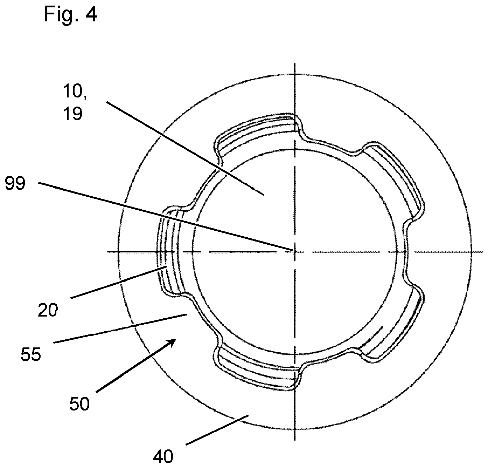

Figure 4 is an enlarged view of the cross-section shown in figure 3.

The figures illustrate an embodiment of an expansion anchor. The expansion anchor comprises an elongate anchor bolt 10 that defines a longitudinal axis 99, wherein the longitudinal axis extends through a leading front end of the anchor bolt 10, which is intended to be inserted first into a borehole, and through a trailing rear end of the anchor bolt 10. The expansion anchor furthermore comprises an expansion sleeve 30 encompassing the anchor bolt 10. The expansion sleeve 30 comprises, preferentially, a number of radially outwardly projecting protrusions for borehole wall engagement.

The anchor bolt 10 comprises an expansion body 12 designated for radially expanding the expansion sleeve 30. The expansion body 12 is situated proximate to the front end of the anchor bolt 10. In the current embodiment, the expansion body 12 and the remainder of the anchor bolt 10 are integrally formed, exhibiting a monolithic structure.

The expansion body 12 has a converging zone 23 designed for radially expanding the expansion sleeve 30 when the expansion body 12 is drawn into the expansion sleeve 30 in the rearward direction. For this purpose, the lateral surface of the expansion body 12 converges in the converging zone 23 towards the rear end of the anchor bolt 10. In the present example, the expansion body 12 lateral surface has generally conical envelope in the converging zone 23, with a focus of convergence on the longitudinal axis 99. However, this is merely an example, and other converging designs are also possible. Moreover, recesses can be provided in the expansion body 12 within the converging zone 23, which might interact with the expansion sleeve 30 so as to modulate the expansion path of the expansion sleeve 30.

In this example, the expansion body 12 is designed with a transition zone 22 and a tip zone 21. The transition zone 22 is located forward of and adjacent to the converging zone 23, while the tip zone 21 is located forward of and adjacent to the transition zone 22. In the transition zone 22, the rearward convergence is less pronounced compared to the converging zone 23, or it may even be zero. However, it is preferably not reversed, meaning it does not converge forward. In this specific example, there is no convergence (i.e. it is zero) in the transition zone 22. The expansion body 12 features a cylindrical lateral surface in the transition zone 22, specifically a cylinder with a circular base. In the tip zone 21, the lateral surface of the expansion body 12 converges towards the front end of the anchor.

The anchor bolt 10 has a neck 25, which is located adjacent to and rearwards of the expansion body 12. The expansion sleeve 30 at least partly surrounds this neck 25, at least before installation of the anchor. At the neck 25, the cross-sectional area of the anchor bolt 10 can be minimal. In particular, the neck 25 has generally cylindrical shape. The cylinder base could be circular. However, in the present embodiment, a plurality of longitudinal grooves (not shown) is provided within the neck 25, with the grooves extending parallel to the longitudinal axis 99. Accordingly, the cylinder base is non-circular in the present embodiment. The expansion sleeve 30 engages in the longitudinal grooves. For this purpose, the expansion sleeve 30 has axially extending ribs, which project into the respective longitudinal grooves. This engagement forms a rotational lock, which prevents rotating of the expansion sleeve 30 around the anchor bolt 10.

The anchor is of the stud type. Accordingly, the anchor bolt 10 (which is preferably monolithic) has, adjoining the neck 25 at the rearward end of the neck 25, a shoulder 16 that faces forwards, i.e. which faces the expansion body 12, wherein the shoulder 16 provides a rearward axial abutment for the expansion sleeve 30 for advancing the expansion sleeve 30 forwards into a borehole when the anchor is inserted into the borehole. In particular, the anchor bolt comprises a flange 17 that projects from the anchor bolt 10, wherein the shoulder 16 is provided on the flange 17. Accordingly, the flange 17 provides an axial abutment for the expansion sleeve 30 for advancing the expansion sleeve 30 forwards into the borehole when the anchor is inserted into the borehole. The flange 17 has generally circular outline. It adjoins the neck 25 at the rearward end of the neck 25. Preferably, the flange 17 and the remainder of the anchor bolt 10 are integrally formed, exhibiting a monolithic structure.

In a rear region of the anchor bolt 10, the anchor bolt 10 is provided with an axially extending threaded zone 19, in which a screw thread 20 is provided on the anchor bolt 10. The screw thread 20, which is an external thread, provides a tension-introducing structure for introducing rearwardly directed tension into the anchor bolt 10. The screw thread 20 winds around the anchor bolt 10 and around the longitudinal axis 99. Preferably, the screw thread 20 and the anchor bolt 10 are monolithic. The screw thread 20 is preferably metric size or imperial size.

Located in-between the threaded zone 19 and the flange 17, the anchor bolt 10 might have an unthreaded zone 18. The unthreaded zone 18 is generally cylindrical, in the present embodiment with cylindrical base.

The anchor bolt 10 consists of a metal material, preferably of steel, which might optionally be coated. The expansion sleeve 30 consists of a metal material, preferably of steel, which might optionally be coated.

The anchor further comprises a shear support sleeve 40, which surrounds the anchor bolt 10, at least in the threaded zone 19. The shear support sleeve 40 is so positioned that it bridges the mouth of the borehole when the anchor is installed in the borehole as intended. In particular, when the anchor is installed as intended, the shear support sleeve 40 extends both within an attachment part 2 attached by means of the anchor and within the substrate 6 in which the anchor is anchored. Accordingly, the shear support sleeve 40 is able to transfer shear loads, i.e. loads directed perpendicular to the longitudinal axis 99 of the anchor bolt 10, from the attachment part 2 into the substrate 6.

The screw thread 20 exhibits a number of n grooves 50, which extend axially, i.e. which extend parallel to the longitudinal axis 99. The grooves 50 cut into the screw thread 20 and divide the screw thread 20 into screw thread segments. In the shown embodiment, the number n is by way of example five, meaning that there are five grooves 50 and five screw thread segments. The grooves 50 each intersect the screw thread 20 but stop short of extending into the anchor bolt 10 itself, i.e. the grooves do not extend into the anchor bolt 10 itself.

On the inside of shear support sleeve 40 is provided a number n of ridges 55, which extend axially, i.e. which extend parallel to the longitudinal axis 99. Each of the ridges 55 projects radially into a different one of the grooves 50 that intersect the screw thread 20, thereby creating an interlock. Accordingly, each of the ridges 55 is aligned with one of the grooves 50. Since, as mentioned above, the number n is by way of example five, there are provided five ridges 55 in the embodiment. The ridges 55 and the shear support sleeve 40 are monolithic by way of example. The axially extending grooves 50 exhibit rotational symmetry with respect to the longitudinal axis 99 and, correspondingly, the axially extending ridges 55 exhibit rotational symmetry with respect to the longitudinal axis 99. Accordingly, the grooves 50 are equidistantly spaced and identical in shape and the ridges 55 are equidistantly spaced and identical in shape, respectively. Since the number n is five in the present embodiment, the rotational symmetry is a fivefold rotational symmetry. Accordingly, both the ridges 55 and the grooves 50 exhibit pentalobular appearance when viewed in cross-section (with respect to the longitudinal axis 99).

The shear support sleeve 40 consists of a metal material, preferably of steel, which might optionally be coated. The substrate 6 is in particular a concrete substrate. The expansion sleeve 30 and the expansion body 12 are arranged within the substrate 6 when the anchor is installed as intended. The attachment part 2 could be e.g. a metal part, e.g. the base of a column or the base of a strut.

The outer shape of the shear support sleeve 40 can be circular cylindrical, as shown by way of example in the drawings. In modified embodiments, other outer shapes can be provided. For example, converging regions or projections can be provided on the outside of the shear support sleeve. In a modification of the shown embodiment, the shear support sleeve 40 can have an axially extending slit, which stems from its manufacture by means of a bending process. The axially extending slit can extend, axially, along the entire shear support sleeve 40.

By way of example the anchor could e.g. be an M12 anchor, i.e. the screw thread 20 can be M12 sized. A ration of Aₛₘₒₒₜₕ = 51.7 mm² versus Aₚₑₙₜ = 61.02 mm² [+18%] can be provided.

When the anchor is installed, the anchor bolt 10 is introduced, front end first, into a borehole in the substrate 6 and driven into the borehole, in particular by means of hammer blows. During this process, the shear support sleeve 40 is synchronously driven into the borehole, since a nut 8 provided on the threaded zone 19 of the anchor bolt 10 abuts (directly or indirectly, e.g. via a washer as shown) against the shear support sleeve 40, and this axial abutment transfers the hammer blows onto the shear support sleeve 40. The shear support sleeve 40 is driven into the borehole until it is embedded in the substrate 6.

Following installation, the expansion body 12 is drawn into the front-end region of the expansion sleeve 30. In the present embodiment, this is achieved by pulling the anchor bolt 10 together with the expansion body 12 rearwardly, in particular by tightening the nut 8.

## Claims

1. Expansion anchor having
- an anchor bolt (10) having a longitudinal axis (99),
- a screw thread (20), which is provided on the anchor bolt (10) and which winds around the anchor bolt (10) and around the longitudinal axis (99) in a threaded zone (19) of the anchor bolt (10), and
- an expansion sleeve (30) surrounding the anchor bolt (10),
- wherein the anchor bolt (10) has an expansion body (12) located in a front region of the anchor bolt (10), wherein the expansion body (12) has a converging zone (23) for expanding the expansion sleeve (30),
- wherein the anchor bolt (10) further has a flange (17) that provides an abutment for the expansion sleeve (30), wherein the flange (17) is arranged between the expansion body (12) and the threaded zone (19),
- wherein the anchor bolt (10) further has a neck (25), which is arranged between the expansion body (12) and the flange (17), and which adjoins both the expansion body (12) and the flange (17), wherein the expansion sleeve (30) surrounds the neck (25) of the anchor bolt (10), and
- wherein a shear support sleeve (40) is provided, which surrounds the threaded zone (19) at least in regions of the threaded zone (19),
**characterized in that**
- the screw thread (20) is intersected by an axially extending groove (50), and
- the shear support sleeve (40) is provided, on its inside, with an axially extending ridge (55), which projects into the axially extending groove (50) intersecting the screw thread (20).

2. Expansion anchor according to claim 1,
**characterized in that**
the axially extending groove (50) does not reach into the anchor bolt (10).

3. Expansion anchor according to any of claims 1 or 2,
**characterized in that**
- the screw thread (20) is intersected by n axially extending grooves (50), and
- the shear support sleeve (40) is provided, on its inside, with n axially extending ridges (55), wherein each of the ridges (55) projects into a different one of the axially extending grooves (50) intersecting the screw thread (20), and wherein n is a natural number, excluding zero.

4. Expansion anchor according to claim 3,
**characterized in that**
n is greater than or equal to 2, and
n is smaller than or equal to 1.5 times the outside diameter of the screw thread (20) in millimetres, with the result of this multiplication rounded up to the nearest whole number.

5. Expansion anchor according to any of claims 3 or 4,
**characterized in that**
the axially extending grooves (50) exhibit rotational symmetry, with respect to the longitudinal axis (99).

6. Expansion anchor according to any of claims 3 to 5,
**characterized in that**
the n axially extending grooves (50) span, in total, between 25% to 60% of the overall circumference of the anchor bolt (10).
